# EUROPÄISCHE PATENTSCHRIFT

(11) **EP 4 298 008 B1**
(45) Veröffentlichungstag und Bekanntmachung des Hinweises auf die Patenterteilung: **26.03.2025**
(21) Anmeldenummer: 22708278.1
(22) Anmeldetag: 25.02.2022
(51) Int. Cl.: B62D 33/02, B62D 33/033

(54) **FAHRZEUGLADERAUM, INSBESONDERE PICKUP-FAHRZEUG- ODER ANHÄNGEFAHRZEUGLADERAUM**
VEHICLE LOADING AREA, IN PARTICULAR PICKUP VEHICLE OR TRAILER VEHICLE LOADING AREA
ESPACE DE CHARGEMENT DE VÉHICULE, EN PARTICULIER ESPACE DE CHARGEMENT DE VÉHICULE DE TYPE PICK-UP OU DE VÉHICULE TRACTÉ

(30) Priorität: 25.02.2021 AT 501322021
(43) Veröffentlichungstag der Anmeldung: 03.01.2024
(73) Patentinhaber: Weitzer, Michael, 2105 Unterrohrbach (AT)
(72) Erfinder: Weitzer, Michael, 2105 Unterrohrbach (AT)
(74) Vertreter: Wildhack & Jellinek Patentanwälte GmbH
(86) Internationale Anmeldenummer: PCT/AT2022/060052
(87) Internationale Veröffentlichungsnummer: WO 2022/178566

(56) Entgegenhaltungen:
- WO-A1-2008/019437
- FR-A1- 2 935 952
- US-A- 3 217 449
- US-B1- 9 708 014

## Beschreibung

Die Erfindung betrifft einen Fahrzeugladeraum, insbesondere Pickup-Fahrzeug- oder Anhängefahrzeug-Laderaum, mit auf einem Grundrahmen mit Ladefläche, von demselben aufragenden Stehern, insbesondere für die Befestigung von Laderaumseitenwänden, einer erweiterten Ladefläche, eines Dachtragwerks od. dgl.

Pickups sind schon lange, insbesondere in den USA und auch im asiatischen Raum, für die verschiedensten Ansprüche des Transports von Konsumgütern, Agrarprodukten, Geräten, gegebenenfalls auch Personen usw. besonders beliebte Kleinfahrzeuge, die sich in den letzten Jahren auch in Europa immer mehr durchgesetzt haben.

Aus den folgenden Schutzrechts- und Schutzrechtsanmeldungsschriften, deren Inhalt jeweils kurz umschrieben ist, sind die verschiedensten Typen sowie Änderungs- und Ausbauvarianten von Pickups bekannt geworden:
WO 2004089671 A2: Pickup mit Rohrrahmen und vergrößerbarer Ladefläche,
AT 516419 B1: Pickup mit Wechselaufbauten,
US 4842326 A: Pickup mit Wechselaufbauten,
AT 9270 U2: Anhänger mit einem Rohrrahmen, Ladefläche, einfach anordenbaren Stehern und anordenbaren Ladebordwänden,
US 2014034409 A1: Pickup mit verlängerbarer Ladefläche,
US 10166906 B1: Plattform mit versenkbaren Rungen und Seitenwänden,
US 9227675 B1: Pickup mit abnehmbaren Bordwänden und Wechselaufbauten,
DE 102016117133 A1: Mehrfachanordnung von Bordwänden übereinander.

Es handelt sich dort im Wesentlichen nur um Modulaufbauten für Fahrzeuge, die im ganzen auf die Ladefläche des Fahrzeugs, insbesondere Pickups, aufleg- und befestigbar sind.

Weiters offenbaren sowohl das Dokument US 3 217 449 A als auch das Dokument US 9 708 014 B1 ein gerüstartiges Rahmensystem für die Ladefläche eines Kleintransporters. Die Elemente werden durch zusätzliche Verbindungselemente und separate Befestigungen miteinander verbunden.

Keines dieser Dokumente zeigt Aufbausteher, die höhen- und bauformveränderlich sind, was die Flexibilität bei der Gestaltung des Gesamtaufbaus einschränkt.

Gegenstand der vorliegenden Erfindung ist ein wie eingangs erwähnter Fahrzeugladeraum, der dadurch gekennzeichnet ist, dass er laderaumsvolumenveränderbar, insbesondere laderaumshöhenveränderbar, mit Stehern diskreter unterschiedlicher Gesamtlänge ausgebildet ist, welche ihrerseits mit unterschiedliche Längen aufweisenden, stabil ineinander steckbaren, rohrartigen Teilstehern jeweils mit einem Außenrohr und einem im Bereich von dessen Ende in dasselbe eingeschobenen und mit ihm verbundenen Innen- bzw. Einschubrohrstück gebildet sind, welches das Ende des Außenrohrs überragt und mit diesem Überragstück in das offene Ende des Außenrohrs eines anschließenden Teilstehers oder einer in den Laderaumgrundrahmen integrierten, nach oben hin offenen, gleiche Innenquerschnittsfläche wie das Außenrohr aufweisenden Basis- und Zentrierhülse passgenau einschiebbar ist, und dass innerhalb des Außenrohrs und des mit ihm fix verbundenen Einschubrohrstücks axial eine drehbare, über das offene Ende des Einschubrohrstücks hinausragende Stange mit Gewinde zumindest an ihren Enden, insbesondere Gewindestange, angeordnet ist, welche an ihrem freien Ende ein Schraubgewinde aufweist, das zur Schraubverbindung des Teilstehers mit dem Grundrahmen, mit einem in denselben integrierten Innengewinde einer Gewindemutter, Gewindeplatte od. dgl. einschraubkooperierbar ist.

Die Vorrichtung gemäß der Erfindung besitzt eine Basisladefläche und unterschiedliche Elemente, die baukastenartig aneinander befestigt werden können. So können die Erweiterungen für die Ladefläche, Seitenwände, Steher usw. befestigt werden, die eine große Vielfalt des Aufbaus ermöglichen.

Insbesondere der Aufbau der Steher bzw deren Befestigung ist bis jetzt nicht bekannt geworden. Die Teilsteher sind ineinander steckbar und dann miteinander durch Befestigungs- und Stabilisierelemente steif miteinander verbindbar. Die Befestigungselemente sind insbesondere Gewindestangen, die mit Muttern befestigt werden. Auf die Steher können weitere, für Laderäume wichtige, Elemente aufgesetzt und in die bestehenden Befestigungselemente eingreifen, z.B. wieder in die selben Muttern eingeschraubt werden. Auf diese Weise wird ein schneller und sehr flexibler Aufbau von Pickup-Laderäumen erreicht.

Auf der Ladefläche des Fahrzeugs können auch Verschlüsse angebracht sein, mit welchen z.B. Erweiterungen der Ladeflächen auch einfach verbunden werden können bzw. in die die Steher eingeschraubt werden können.

Da letzthin beim Aneinanderfügen der Teilsteher und gleicherweise beim Verankern der Steher an den Ecken des Grundgerüsts Drehvorgänge für die Schraubverbindungen nötig sind, also ein Verdrehen der Teilsteher gegeneinander zu vermeiden ist, ist günstigerweise vorgesehen, dass die Außenrohre und die Einschubrohrstücke sowie die Basis- und Zentrierhülse des Grundrahmens bevorzugt Quadrat- oder Sechseckquerschnitt aufweisen.

Selbstverständlich sind auch entsprechende andere Querschnittsformen, die ein gegenseitiges Verdrehen der Teilsteher gegeneinander verhindern, möglich.

Vorteilhafterweise ist vorgesehen, dass im Außenrohr jedes der Teilsteher ein Querboden angeordnet ist, mittels welchem eine mit der Stange schraubverbundene Gewindemutter od. dgl. abgestützt ist, an welche - für die Drehung der Stange für die Verschraubung von deren Gewinde mit dem Innengewinde der Mutter oder einer Gewindeplatte des Grundrahmens - ein, gegebenenfalls motorisiertes, Drehwerkzeug vom offenen Ende des Außenrohrs her ansetz- bzw. anschließbar ist.

Um ein unkompliziertes Anschließen von Ladebordwänden, Gurten, Seilen u. dgl. an die Teilsteher zu ermöglichen, ist es günstig, wenn die Teilsteher von ihnen seitlich wegstehende Laschen für die Befestigung von Laderaumseitenwandelementen, gegenseitigen Verstrebungen u. dgl. aufweisen.

Für eine sichere und stabile Verankerung der Steher am Grundrahmen ganz wesentlich ist eine Ausführungsvariante gemäß welcher im Laderaumgrundrahmen, zumindest jeweils im Nahbereich von, insbesondere direkt, an dessen Ecken jeweils eine Mutter oder eine Gewindeplatte mit Innengewinde für die Schraubverankerung der Stangen, insbesondere Gewindestangen, der Teilsteher angeordnet sind.

Weiters kann erfindungsgemäß vorgesehen sein, dass große Länge aufweisende Steher einteilig ausgeführt sind, wobei dort im Inneren des mit einer Deckscheibe einseitig geschlossenen Außenrohrs eine Zentrierscheibe für die die Deckplatte durchsetzende Stangen angeordnet ist, deren mit ihr verschraubte Mutter von der Deckplatte abgestützt ist.

Für die Erleichterung des Vorgangs des Aneinanderschraubens der ineinander gesteckten Teilsteher zur Bildung der Steher, und für deren Verankerung im Grundrahmen ist es besonders günstig, wenn für das Ansetzen eines Drehwerkzeugs an der Langmutter und damit für das Drehen der Stange, insbesondere Gewindestange, ein in einem das Außenrohr jedes der Teilsteher überstülpendes Motordepot mit Antriebsmotor für das Drehwerkzeug vorgesehen ist.

Nicht unerwähnt soll bleiben, dass günstigerweise vorgesehen ist, dass die mit der Stange, insbesondere Gewindestange, verschraubte Langmutter einen Innenraum mit einem Querschnittsdurchmesser aufweist, der größer ist als der Querschnittsdurchmesser der Stange, insbesondere Gewindestange.

Anhand der Zeichnung wird die Erfindung näher erläutert:
Es zeigen die Fig. 1 in Schrägansicht den Grundrahmen eines Pickup-Laderaums mit dem Radkasten, die Fig. 2 einen mit zwei Teilstehern zu bildenden bzw. gebildeten Steher in Schnittansicht, die Fig. 3 den Grundrahmen mit einem von einer seiner Ecken aufragenden Steher in einem Zustand knapp vor dem Ineinanderstecken der ihn bildenden Teilsteher und vor deren Einstecken in die Zentrierhülse des Grundrahmens, die Fig. 4 und 5 jeweils in Schrägansicht den Grundrahmen mit Ladefläche und den montierten Teilstehern und Stehern an seinen Ecken, und die Fig. 6 den Grundrahmen mit vier Stehern, auf welche ein stabilisierender Aufsetzrahmen aufgesetzt ist.

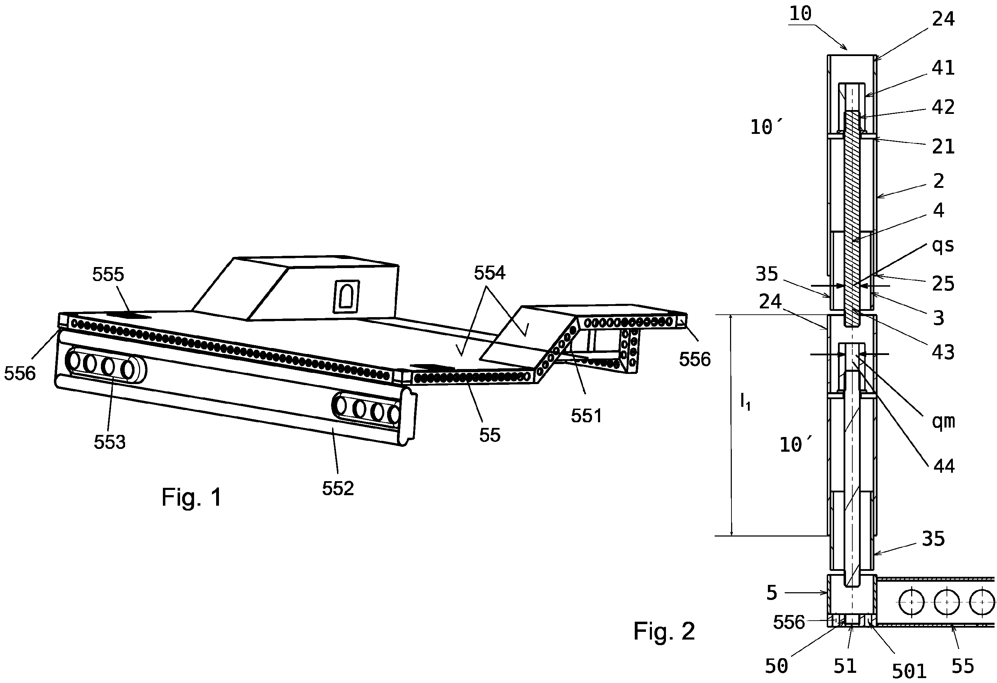

Die Fig. 1. zeigt den grundsätzlichen Aufbau eines erfindungsgemäßen Pickup-Laderaums mit Grundrahmen 55, Ladefläche 554, den beiden Radkästen 551, Stoßstange 552 und Rückleuchten 553, wobei die spezielle Ausbildung der vier Ecken 556 des Grundrahmens 55 dort nicht näher ausgeführt ist.

Angedeutet sind weiters drei der vier Zurrösen 555 für die Halterung des Ladeguts mittels Bändern, Seilen od. dgl.

Die Schnittansicht der Fig. 2 zeigt - bei sonst gleichbleibenden Bezugszeichenbedeutungen - einen neuen, mit zwei gleichen ineinander zu steckenden Teilstehern 10' gebildeten Steher 10 vor dem Zusammenstecken der beiden Teilsteher und dessen Einstecken in die Basis- bzw. Zentrierhülse 5 an einer der Ecken 556 des Grundrahmens 55.

Jeder der beiden Teilsteher 10' mit jeweils gleichen Längen l1 besteht aus einem Außenrohr 2 und einem in dasselbe eingeschobenen und mit demselben fix, beispielsweise durch Klebung oder Schweißung, verbundenen Einschubrohrstück 3, das über das untere Ende 25 des Außenrohrs 2 als Einschubrohrende 35 hinausragt und seinerseits in den oberen Endbereich 24 des Außenrohrs 2 des anzuschließenden unteren Teilstehers 10' passgenau einsteckbar ist.

Im Inneren des Außenrohrs 2 und des Einschubrohrs 3 befindet sich, vorzugsweise mittig bzw. entlang von deren Mittelachse - das freie Ende des Einschubrohrs 3 überragend - die Gewindestange 4, die jeweils an ihrem oberen Ende mit einer Langmutter 41 mit Innengewinde 42 verschraubt ist und sich, und damit auch die Gewindestange 4, am Querboden 21 im Innenraum des Außenrohrs 2 abstützt.

Das das Einschubrohrstück 3 überragende Ende 43 der Gewindestange 4 kann nach erfolgtem Einschub des Einschubrohrstücks 3 des oberen Teilstehers 10' mit dem Innengewinde der Langmutter 41 des unteren Teilstehers 10' verschraubt werden, wobei synchron der passgenaue Einschub des Einschubrohrstücks 3 in den Oberteil 24 des Außenrohrs 2 dieses nächsten, also unteren, Teilstehers 10' erfolgt ist.

Das Einschubrohrstück 3 des unteren Stehers 10' passt exakt in die Basis- und Zentrierhülse 5 an einer der Ecken 556 des Grundrahmens 55. Innerhalb dieser Hülse 5 ist eine Mutter 51 oder eine Gewindeplatte 501 mit Innengewinde 50 angeordnet, welches nach dem passgenauen, satten Einstecken des unteren Teilstehers 10' in die Hülse 5 mit dem Gewinde des unteren Endbereichs 43 der Gewindestange 4 verschraubbar ist.

Der Innendurchmesser qm des innengewindelosen Oberteils der Langmutter 41 des unteren Teilstehers 10" ist größer als der Außendurchmesser qs der Gewindestange 4.

Jeder der beiden Teilsteher 10' hat eine Länge l1 und sie bilden - allerdings erst nach sattem Ineinanderstecken und Miteinander verschrauben - zusammen einen Steher 10 mit einer Länge L1.

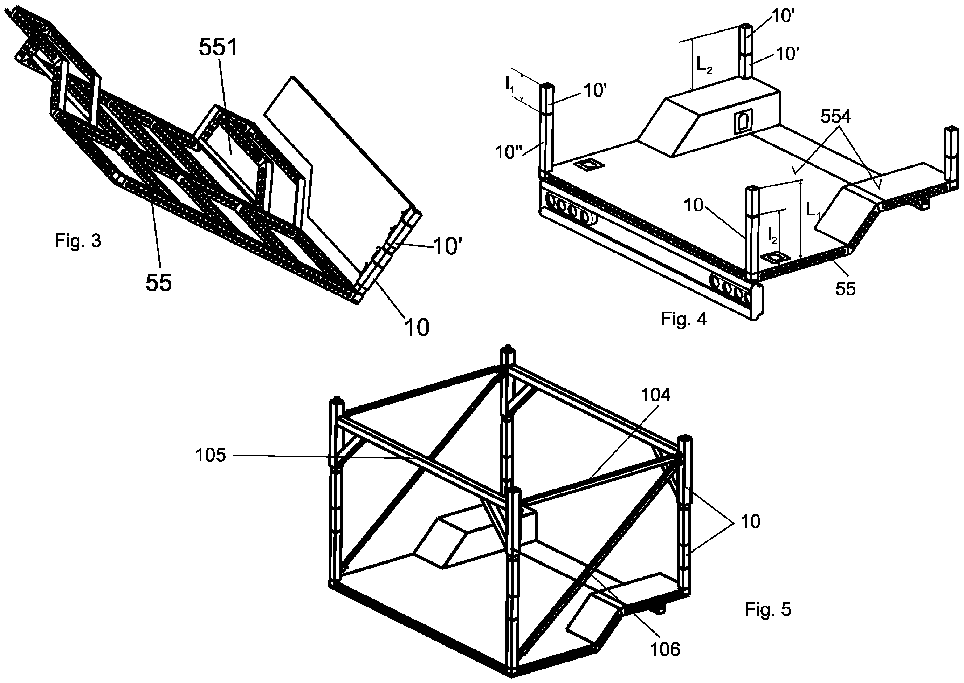

Die Fig. 3 zeigt - bei sonst gleichbleibenden Bezugszeichenbedeutungen - in Schrägansicht voll den Pickup-Grundrahmen 55 mit den beiden Radkästen 551, noch ohne Ladefläche 554. Sie zeigt weiters eine Anordnung eines mit zwei gleichen Teilstehern 10' zu bildenden Stehers 10, wobei jeder der Teilsteher über nicht gezeigte Laschen jeweils mit einer zweiteiligen Seitenbordwand 102 ausgestattet ist, und zwar knapp vor dem endgültigen Ineinanderstecken der beiden Teilsteher 10' zum Stecher 10, wobei die beiden unterschiedlichen Teilbordwände zusammen eine Gesamt-Seitenbordwand 102 bilden.

Aus der Fig. 4 ist - bei sonst gleichbleibenden Bezugszeichenbedeutungen - klar ersichtlich, wie von jeder der Ecken 556 des Grundrahmens 55 jeweils ein aus unterschiedliche Längen l1, l2 aufweisenden ineinander gesteckten Teilstehern 10', 10" gebildeter, unterschiedliche Gesamtlängen L1, L2 aufweisender Steher 10 aufragt.

Fig. 5 zeigt - bei sonst gleichbleibenden Bezugszeichenbedeutungen - wie mit den neuartigen, mit Teilstehern 10', 10" gebildeten Stehern 10 ein stabiles Stehergerüst für einen Laderaum für aufragendes längeres Ladegut aufgebaut werden kann, wobei jeweils zwei obere Teilsteher 10' über einen jeweils mit Schrägstreben 103 stabilisierten Holm 104 miteinander unlösbar verbunden sind und diese bei den so gebildeten Teilsteherkonstrukte mittels zwei Verbindungsstangen 104 miteinander verbunden sind.

Außerdem sind noch zwei Schräg-Querstreben 106 für die volle Stabilisierung des Laderaums vorgesehen.

Alle vier oberen Teilsteher 10" bilden gemeinsam mit ihren jeweiligen Holmen 104 und Verbindungsstangen 105 insgesamt einen Aufsatzrahmen, der auf den restlichen Stehern 10 bzw. Teilstehern 10' aufgesetzt ist.

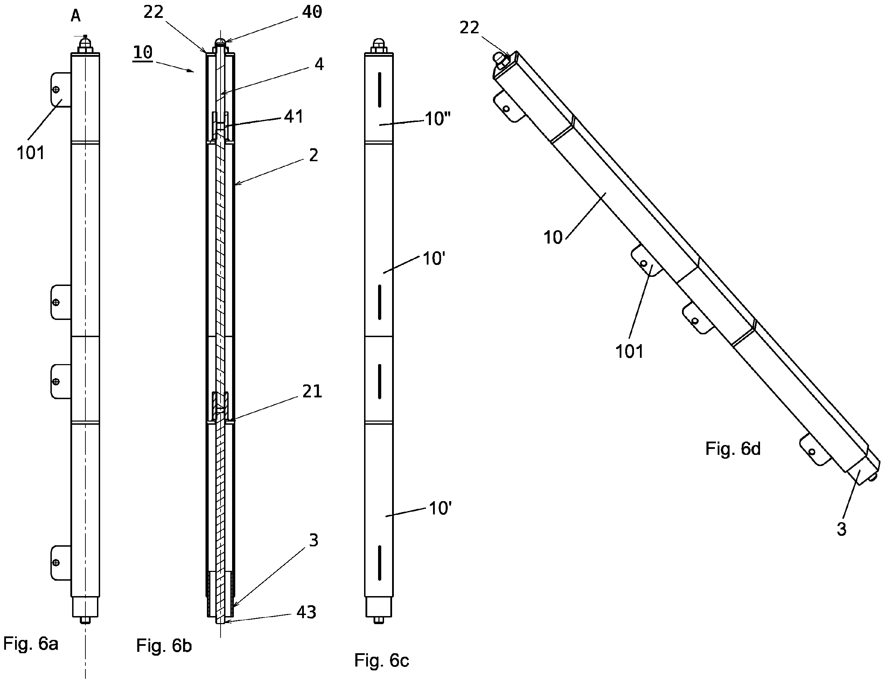

Die Fig. 6a bis 6d zeigen - bei sonst gleichbleibenden Bezugszeichendeutungen - in vier Ansichten jeweils den gleichen Steher 10, wobei nur der untere Teilsteher 10' für den Anschluss an den Pickup-Grundrahmen 55 mit dem Einschubrohrstück 3 ausgebildet ist. Die zu einer langen Stange zusammengeschraubten einzelnen Gewindestangen 4 sind mit einer sich am Deckel 22 des oberen Teilstehers 10' abstützenden und auf übliche Art von außen verdrehbaren Mutter 40 verschraubt.

Erfindungsgemäß wird der erfindungsgemäße Fahrzeugladraum auf einem Fahrzeug, insbesondere einem Pickup-Fahrzeug oder Anhängefahrzeug angeordnet bzw. befestigt wird.

## Patentansprüche

1. Fahrzeugladeraum, insbesondere Pickup-Fahrzeug- oder Anhängefahrzeug-laderaum, mit auf einem Grundrahmen (55) mit Ladefläche (56), von demselben aufragenden Stehern (10), insbesondere für die Befestigung von Laderaumseitenwänden, einer erweiterten Ladefläche, eines Dachtragwerks od. dgl.,
**dadurch gekennzeichnet,**
- **dass** derselbe Fahrzeugladeraum (100) laderaumsvolumenveränderbar, insbesondere laderaumshöhenveränderbar, mit Stehern (10) diskreter unterschiedlicher Gesamtlänge (L1, L2, ...) ausgebildet ist, welche ihrerseits mit unterschiedliche Längen (l1, l2, ...) aufweisenden, stabil ineinander steckbaren, rohrartigen Teilstehern (10', 10", ...) jeweils mit einem Außenrohr (2) und einem im Bereich von dessen Ende (25) in dasselbe eingeschobenen und mit ihm verbundenen Innen- bzw. Einschubrohrstück (3) gebildet sind, welches das Ende (25) des Außenrohrs (2) überragt und mit diesem Überragstück (33) in das offene Ende (24) des Außenrohrs (2) eines anschließenden Teilstehers (10') oder einer in den Laderaumgrundrahmen (55) integrierten, nach oben hin offenen, gleiche Innenquerschnittsfläche (qi) wie das Außenrohr (2) aufweisenden Basis- und Zentrierhülse (5) passgenau einschiebbar ist, und
- **dass** innerhalb des Außenrohrs (2) und des mit ihm fix verbundenen Einschubrohrstücks (3) axial eine drehbare, über das offene Ende (35) desselben Einschubrohrstücks (3) hinausragende Stange, insbesondere Gewindestange (4), angeordnet ist, welche an ihrem freien Ende (45) ein Schraubgewinde (43) aufweist, das zur Schraubverbindung des Teilstehers (10' 10", ...) mit dem Grundrahmen (55), mit einem in denselben integrierten Innengewinde (50) einer Mutter (51), Gewindeplatte (501) od. dgl. einschraubkooperierbar ist.

2. Fahrzeugladeraum nach Anspruch 1, **dadurch gekennzeichnet, dass** die Außenrohre (2) und die Einschubrohrstücke (3) sowie die Basis- und Zentrierhülse (5) des Grundrahmens (55) Quadrat- oder Sechseckquerschnitt aufweisen.

3. Fahrzeugladeraum nach Anspruch 1 oder 2, **dadurch gekennzeichnet, dass** im Außenrohr (2) jedes der Teilsteher (10', 10", ...) ein Querboden (21) angeordnet ist, mittels welchem eine mit der Stange, insbesondere der Gewindestange (4), schraubverbundene Gewindemutter (41) od. dgl. abgestützt ist, an welche - für die Drehung der Stange, insbesondere der Gewindestange (4), für die Verschraubung von deren Gewinde (43) mit dem Innengewinde (50) der Mutter (51) oder einer Gewindeplatte (501) des Grundrahmens (55) - ein gegebenenfalls motorisiertes Drehwerkzeug vom oberen offenen Ende (24) des Außenrohrs (2) her ansetz- bzw. anschließbar ist.

4. Fahrzeugladeraum nach einem der Ansprüche 1 bis 3, **dadurch gekennzeichnet, dass** die Teilsteher (10', 10", ...) von ihnen seitlich wegstehende Laschen (101) für die Befestigung von Laderaumseitenwandelementen (102), gegenseitigen Verstrebungen od. dgl. aufweisen.

5. Fahrzeugladeraum nach einem der Ansprüche 1 bis 4, **dadurch gekennzeichnet, dass** im Laderaum-Grundrahmen (55), zumindest jeweils im Nahbereich von, insbesondere direkt an, dessen Ecken (556) Gewindeplatten (501) für die Schraubverankerung der Stangen, insbesondere der Gewindestangen (4),, der Teilsteher (10', 10", ...) angeordnet sind.

6. Fahrzeugladeraum nach einem der Ansprüche 1 bis 5, **dadurch gekennzeichnet, dass** gemäß einer Ausführungsvariante, insbesondere für Steher (10) mit höheren Längen l1 nur der jeweils unterste, an den Grundrahmen (55) zu schraubende Teilsteher (10') mit dem in dessen Basis- bzw. Zentrierhülse (5) passgenau einschiebbaren, unterseitig aus dem Außenrohr (2) herausragenden Einschubrohrstück (3) ausgebildet ist, während die restlichen Teilsteher (10") - ohne für deren Ineinanderstecken vorgesehene Einschubrohrstücke (3) - allein mittels der über an den Innen-Querböden (21) sich abstützenden Langmuttern (41) aneinander geschraubten Stangen, insbesondere der Gewindestangen (4),über ihre jeweiligen Enden zum Steher (10) satt aneinander gepresst sind, wobei für die Drehung der Stangen, insbesondere der Gewindestangen (4),der Teilsteher (10', 10") eine sich an einem Deckel (22) des obersten Teilstehers (10") sich abstützende, mit dem oberen Endbereich der Stange, insbesondere der Gewindestange (4),verschraubte mittels Drehwerkzeug betätigbare Drehmutter (40) verantwortlich ist.

7. Fahrzeugladeraum nach einem der Ansprüche 1 bis 6, **dadurch gekennzeichnet, dass** für das Ansetzen eines Drehwerkzeugs an der Langmutter (43) und damit für das Drehen der Stange, insbesondere der Gewindestange (4),ein in einem das Außenrohr (2) jedes der Teilsteher (10', 10", ...) überstülpendes Motordepot mit Antriebsmotor für das Drehwerkzeug vorgesehen ist.

8. Fahrzeugladeraum nach einem der Ansprüche 1 bis 7, **dadurch gekennzeichnet, dass** die mit der Stange, insbesondere der Gewindestange (4),verschraubte Langmutter (41) einen oberen Innenraum (44) mit einem Querschnittsdurchmesser (qm) aufweist, der größer ist als der Querschnittsdurchmesser (qs) der Drehstange (4), insbesondere Gewindestange.

9. Fahrzeug, insbesondere Pickup-Fahrzeug oder Anhängefahrzeug, umfassend einen Fahrzeugladeraum nach einem der Ansprüche 1 bis 8.

## Claims

1. Vehicle loading area, in particular pickup vehicle or trailer vehicle loading area, with vertical elements (10) projecting from a base frame (55) with a loading surface (56), in particular for the fastening of loading area side walls, an extended loading surface, a roof support structure or the like, **characterized in that**
- the same vehicle loading area (100) is configured to have a variable loading area volume, in particular a variable loading area height, with vertical elements (10) of discretely differing total length (L1, L2, ...), which in turn are formed by tubular partial vertical elements (10', 10", ...), which have different lengths (l1, l2, ...) and can be inserted into one another in a stable manner, each with an outer tube (2) and an inner or insertion tube piece (3), which is inserted into and connected to the latter in the region of the end (25) of the outer tube (2), and with this projecting piece (33) can be inserted with a precise fit into the open end (24) of the outer tube (2) of an adjoining partial vertical element (10') or of a base and centering sleeve (5) which is integrated into the loading area base frame (55), is open at the top and has the same internal cross-sectional area (qi) as the outer tube (2), and
- a rotatable rod, in particular a threaded rod (4), which projects beyond the open end (35) of the same insert tube piece (3), is arranged axially inside the outer tube (2) and the insert tube piece (3) fixed thereto, which rod has a screw thread (43) at is free end (45), which screw thread is used for the screw connection of the partial vertical element (10', 10') to the base frame (55), with an internal thread (50) of a nut (51), threaded plate (501) or the like integrated into the latter.

2. Vehicle loading area according to claim 1, **characterized in that** the outer tubes (2) and the insert tube pieces (3) as well as the base and centering sleeve (5) of the base frame (55) have a square or hexagonal cross-section.

3. Vehicle loading area according to claim 1 or 2, **characterized in that** a transverse base (21) is arranged in the outer tube (2) of each of the partial vertical elements (10', 10", ...), by means of which transverse base a threaded nut (41) or the like, which is screw-connected to the rod, in particular the threaded rod (4), is supported, to which - for the rotation of the rod, in particular the threaded rod (4), for screwing its thread (43) to the internal thread (50) of the nut (51) or a threaded plate (501) of the base frame (55) - an optionally motorized rotary tool can be attached or connected from the upper open end (24) of the outer tube (2).

4. Vehicle loading area according to any one of claims 1 to 3, **characterized in that** the partial vertical elements (10', 10", ...) have lugs (101) projecting laterally away from them for the fastening of loading area side wall elements (102), mutual struts or the like.

5. Vehicle loading area according to any one of claims 1 to 4, **characterized in that** threaded plates (501) are arranged in the loading area base frame (55), at least in the vicinity of, in particular directly at, the corners (556) thereof, for screw-anchoring the rods, in particular the threaded rods (4), of the partial vertical elements (10', 10",...).

6. Vehicle loading area according to any one of claims 1 to 5, **characterized in that** according to one embodiment variant, in particular for vertical elements (10) with greater lengths l1, only the respective lowest partial vertical element (10') to be screwed to the base frame (55) is formed with the insertion tube piece (3), which can be inserted precisely into the base or centering sleeve (5) of the vertical element and protrudes from the underside of the outer tube (2), while the remaining partial vertical elements (10") - without the insert tube pieces (3) provided for insertion into one another - are screwed together solely by means of the rods, in particular the threaded rods (4) which are screwed together via the long nuts (41) supported on the inner transverse bases (21), are pressed tightly together via their respective ends to the vertical element (10), wherein a rotating nut (40), which is supported on a cover (22) of the uppermost vertical element (10') and screwed to the upper end region of the rod, in particular the threaded rod (4), is responsible for the rotation of the rods, in particular the threaded rods, of the partial vertical elements (10', 10") and can be actuated by means of a rotating tool.

7. Vehicle loading area according to any one of claims 1 to 6, **characterized in that** for attaching a rotary tool to the long nut (43) and thus for rotating the rod, in particular the threaded rod (4), a motor depot with a drive motor for the rotary tool is provided which extends beyond the outer tube (2) of each of the partial vertical elements (10', 10", ...).

8. Vehicle loading area according to any one of claims 1 to 7, **characterized in that** the long nut (41) screwed to the rod, in particular the threaded rod (4), has an upper inner space (44) with a cross-sectional diameter (qm) which is larger than the cross-sectional diameter (qs) of the rotating rod (4), in particular threaded rod.

9. Vehicle, in particular pickup vehicle or trailer vehicle, comprising a vehicle loading area according to any one of claims 1 to 8.

## Revendications

1. Espace de chargement de véhicule, en particulier espace de chargement de véhicule pick-up ou de véhicule tracté, avec des montants (10) dépassant d'un cadre de base (55) avec surface de chargement (56), en particulier pour la fixation de parois latérales d'espace de chargement, d'une surface de chargement élargie, d'une structure porteuse de toit ou similaire, **caractérisé en ce que**
- le même espace de chargement de véhicule (100) est conçu de manière à pouvoir modifier le volume d'espace de chargement, en particulier de manière à pouvoir modifier la hauteur d'espace de chargement, avec des montants (10) de longueurs totales discrètes différentes (L1, L2, ...), lesquels montants sont à leur tour conçus avec des montants partiels (10', 10", ...) présentant des longueurs différentes (l1, l2, ...), emboîtables de manière stable les uns dans les autres, avec respectivement un tube extérieur (2) et une pièce de tube intérieur ou d'insertion (3) inséré au niveau de son extrémité (25) et relié à celui-ci, laquelle pièce dépasse de l'extrémité (25) du tube extérieur (2) et peut être insérée avec précision avec cette pièce en saillie (33) dans l'extrémité ouverte (24) du tube extérieur (2) d'un montant partiel (10') s'y raccordant ou d'une douille de base et de centrage (5) intégrée dans le cadre de base de l'espace de chargement (55), ouverte vers le haut et présentant la même surface de section transversale intérieure (qi) que le tube extérieur (2) et **en ce que**
- une tige rotative, en particulier une tige filetée (4) qui fait saillie au-delà de l'extrémité ouverte (35) de la même pièce de tube d'insertion (3), est disposée axialement à l'intérieur du tube extérieur (2) et de la pièce de tube d'insertion (3) reliée fixement à celui-ci, laquelle tige présente à son extrémité libre (45) un filetage (43) qui peut être utilisé pour la connexion par vissage du montant partiel (10' 10", ...) au cadre de base (55), avec un filetage intérieur (50) d'un écrou (51), une plaque filetée (501) ou similaire intégré dans le filetage.

2. Espace de chargement de véhicule selon la revendication 1, **caractérisé en ce que** les tubes extérieurs (2) et les pièces de tube d'insertion (3) ainsi que la douille de base et de centrage (5) du cadre de base (55) présentent une section carrée ou hexagonale.

3. Espace de chargement de véhicule selon la revendication 1 ou 2, **caractérisé en ce qu'**un plancher transversal (21) est disposé dans le tube extérieur (2) de chacun des montants partiels (10', 10", ...) au moyen duquel un écrou fileté (41) ou similaire, relié par vis à la tige, en particulier à la tige filetée (4), est supporté, sur lequel - pour la rotation de la tige, en particulier de la tige filetée (4), pour le vissage de son filetage (43) avec le filetage intérieur (50) de l'écrou (51) ou une plaque filetée (501) du cadre de base (55) - un outil de rotation le cas échéant motorisé peut être placé ou raccordé à partir de l'extrémité supérieure ouverte (24) du tube extérieur (2).

4. Espace de chargement de véhicule selon l'une quelconque des revendications 1 à 3, **caractérisé en ce que** les montants partiels (10', 10", ...) présentent des pattes (101) s'écartant latéralement de ceux-ci pour la fixation d'éléments de paroi latérale d'espace de chargement (102), d'entretoises mutuelles ou similaire.

5. Espace de chargement de véhicule selon l'une quelconque des revendications 1 à 4, **caractérisé en ce que** des plaques filetées (501) sont disposées dans le cadre de base (55) de l'espace de chargement, au moins à proximité de ses coins (556), en particulier directement au niveau de ceux-ci, pour l'ancrage par vis des tiges, en particulier des tiges filetées (4), des montants partiels (10', 10", ...).

6. Espace de chargement de véhicule selon l'une quelconque des revendications 1 à 5, **caractérisé en ce que**, selon une variante de réalisation, en particulier pour des montants (10) avec des longueurs l1 plus grandes, seul le montant partiel (10') le plus bas à visser sur le cadre de base (55) est conçu avec la pièce de tube d'insertion (3) pouvant être insérée avec précision dans la douille de base ou de centrage (5) et faisant saillie depuis le dessous du tube extérieur (2), tandis que les montants partiels (10") restants - sans pièces de tube d'insertion (3) prévues pour leur insertion les uns dans les autres - sont pressés étroitement les uns contre les autres au montant (10) par leurs extrémités respectives au moyen des tiges, en particulier des tiges filetées (4), vissées les unes aux autres uniquement par l'intermédiaire des écrous longs (41) prenant appui au niveau des planchers transversaux intérieurs, dans lequel un écrou rotatif (40), qui s'appuie sur un couvercle (22) du montant partiel le plus haut (10") et vissé à la zone d'extrémité supérieure de la tige, en particulier de la tige filetée (4), est responsable de la rotation des tiges, en particulier des tiges filetées (4), des montants partiels (10', 10") et qui peut être actionné au moyen d'un outil rotatif.

7. Espace de chargement de véhicule selon l'une quelconque des revendications 1 à 6, **caractérisé en ce que** pour la mise en place d'un outil de rotation sur l'écrou long (43) et ainsi pour la rotation de la tige, en particulier de la tige filetée (4), un dépôt de moteur avec moteur d'entraînement pour l'outil de rotation est prévu en s'étendant au-delà du tube extérieur (2) de chacun des montants partiels (10', 10", ...).

8. Espace de chargement de véhicule selon l'une quelconque des revendications 1 à 7, **caractérisé en ce que** l'écrou long (41) vissé sur la tige, en particulier la tige filetée (4), présente un espace intérieur supérieur (44) avec un diamètre de section transversale (qm) qui est supérieur au diamètre de section transversale (qs) de la tige de rotation (4), en particulier la tige filetée.

9. Véhicule, en particulier véhicule pick-up ou véhicule tracté, comprenant un espace de chargement de véhicule selon l'une quelconque des revendications 1 à 8.
